# DEMANDE DE BREVET EUROPEEN

(11) **EP 2 410 260 A2**
(43) Date de publication de la demande: **25.01.2012**
(21) Numéro de dépôt: 11174349.8
(22) Date de dépôt: 18.07.2011
(51) Int. Cl.: F24J 2/52

(54) **Structure de montage d'un panneau de récupération d'énergie solaire sur un support, système comprenant une telle structure, installation comprenant un tel système, procédé de montage d'un système de récupération d'énergie solaire sur un support**

(30) Priorité: 19.07.2010 FR 1055842
(71) Demandeur: Tenesol, 69890 La Tour de Salvagny (FR)
(72) Inventeur: Milani, Claude, 69210 L'Arbresle (FR)
(74) Mandataire: Cabinet Plasseraud

(57) **Abrégé**

Structure de montage (10) comprenant

- un profilé de montage (15) comportant :
un socle (16) présentant une largeur (11),
une partie de maintien (25) d'un bord longitudinal (6) d'un panneau de récupération d'énergie solaire (5),
une conduite de drainage (40, 45) agencée sous la partie de maintien (25),

- un organe de fixation (50) comportant deux éléments de blocage (52) délimitant entre eux un espace de réception (60), l'organe de fixation (50) présentant :
une position de montage, dans laquelle les éléments de blocage (52) définissent une première ouverture d'accès (O1) qui est supérieure ou égale à la largeur (11) du socle (16), et
une position de blocage, dans laquelle les éléments de blocage (52) définissent une deuxième ouverture d'accès qui est strictement inférieure à la largeur (11) du socle (16).

## Description

L'invention se rapporte à une structure de montage d'un panneau de récupération d'énergie solaire sur un support, à un système comprenant une telle structure, à une installation comprenant un tel système, et à un procédé de montage d'un système de récupération d'énergie solaire sur un support.

En particulier, l'invention se rapporte à une structure de montage adaptée pour permettre le montage d'au moins un panneau de récupération d'énergie solaire sur un support, ledit panneau de récupération présentant un bord longitudinal selon une direction longitudinale, ladite structure de montage comprenant au moins un profilé de montage qui s'étend selon la direction longitudinale, ledit profilé de montage comportant :
- un socle présentant une largeur selon une direction transversale perpendiculaire à la direction longitudinale,
- une partie de maintien adaptée pour maintenir le bord longitudinal du panneau de récupération, ladite partie de maintien étant placée à distance du socle selon une direction verticale perpendiculaire aux directions longitudinale et transversale,
- au moins une conduite de drainage agencée sous la partie de maintien.

Sans y être limitée, l'invention s'applique notamment à l'intégration de modules photovoltaïques à une charpente constituant le support d'une couverture d'un bâtiment. Les modules photovoltaïques produisant une énergie électrique à partir de la lumière du soleil sont fixés à la charpente, le cas échéant en remplacement d'une partie de la couverture.

Une telle intégration prévue au stade de l'installation de la couverture du bâtiment améliore l'étanchéité et l'esthétisme de la couverture, notamment en limitant les risques de détérioration de la couverture qui existent lorsque les modules photovoltaïques sont montés après que la couverture a été installée.

De plus, une telle intégration offre des avantages économiques dans la mesure où le prix de rachat de l'énergie électrique générée par les modules photovoltaïques est fonction du niveau d'intégration des modules photovoltaïques dans la couverture.

Outre une charpente, le support de tels modules photovoltaïques peut être une façade ou un autre mur extérieur de bâtiment, ou bien encore tout autre support adapté pour recevoir de tels modules.

Une structure de montage qui donne entière satisfaction est connue du document EP-A-2 023 402.

On connaît également, notamment du document DE 20 2009 016197, une structure de montage mettant en oeuvre des organes de fixation du profilé de montage sur le support. Chacun des organes de fixation comporte une base destinée à être fixée sur le support, et deux éléments de blocage écartés l'un de l'autre selon la direction transversale. Les éléments de blocage délimitent entre eux un espace de réception ouvert selon la direction longitudinale et adapté pour recevoir une partie du socle. En particulier, les éléments de blocage sont des parois latérales parallèles entre elles et s'étendant chacune perpendiculairement depuis la base. Les parois latérales présentent chacune une rainure qui est ouverte sur l'espace de réception et qui est adaptée pour recevoir une partie du socle, les rainures des parois latérales étant en regard l'une de l'autre.

L'invention vise, toutefois, à améliorer les structures de montage connues.

A cet effet, selon un premier aspect, l'invention propose une structure de montage adaptée pour permettre le montage d'au moins un panneau de récupération d'énergie solaire sur un support, ledit panneau de récupération présentant un bord longitudinal selon une direction longitudinale, ladite structure de montage comprenant :
- au moins un profilé de montage qui s'étend selon la direction longitudinale, ledit profilé de montage comportant :
   un socle présentant une largeur selon une direction transversale perpendiculaire à la direction longitudinale,
   une partie de maintien adaptée pour maintenir le bord longitudinal du panneau de récupération, ladite partie de maintien étant placée à distance du socle selon une direction verticale perpendiculaire aux directions longitudinale et transversale,
   au moins une conduite de drainage agencée sous la partie de maintien,
- au moins un organe de fixation du profilé de montage sur le support, ledit organe de fixation comportant une base destinée à être fixée sur le support, et deux éléments de blocage écartés l'un de l'autre selon la direction transversale, lesdits éléments de blocage délimitant entre eux un espace de réception ouvert selon la direction longitudinale et adapté pour recevoir une partie du socle, lesdits éléments de blocage étant des parois latérales parallèles entre elles et s'étendant chacune perpendiculairement depuis la base, lesdites parois latérales présentant chacune au moins une rainure qui est ouverte sur l'espace de réception et qui est adaptée pour recevoir une partie du socle, les rainures des parois latérales étant en regard l'une de l'autre,
   dans laquelle la base présente un axe de pivotement s'étendant selon la direction verticale et selon lequel ladite base est fixée sur le support, ledit organe de fixation étant pivotant autour de l'axe de pivotement entre :
   une position de montage, dans laquelle les parois latérales sont parallèles à la direction longitudinale et définissent une première ouverture d'accès à l'espace de réception dans la direction verticale, ladite première ouverture d'accès présentant une dimension minimale selon la direction transversale qui est supérieure ou égale à la largeur du socle, les rainures des parois latérales étant écartées du socle lorsque le profilé de montage est placé dans l'espace de réception, de sorte que les parois latérales n'interfèrent pas avec le socle, et
   une position de blocage, dans laquelle les parois latérales sont inclinées par rapport à la direction longitudinale et définissent une deuxième ouverture d'accès à l'espace de réception dans la direction verticale, ladite deuxième ouverture d'accès présentant une dimension minimale selon la direction transversale qui est strictement inférieure à la largeur du socle, les rainures des parois latérales recevant une partie du socle lorsque le profilé de montage est placé dans l'espace de réception, de sorte que les parois latérales interfèrent avec le socle.

Ainsi, l'organe de fixation offrant le blocage du profilé de montage par un déplacement de l'ensemble de l'organe de fixation entre la position de montage et la position de blocage, après la mise en place du profilé de montage dans l'espace de réception, permet de simplifier le montage de la structure de montage sur le support.

Du fait de l'ouverture de l'espace de réception selon la direction longitudinale, la structure de montage peut autoriser le déplacement du profilé de montage par rapport à l'organe de fixation selon la direction longitudinale sous l'effet de la dilatation du profilé de montage. En particulier, la structure de montage peut comprendre un organe d'arrêt adapté pour bloquer le profilé de montage (à au moins l'une de ses extrémités) selon la direction longitudinale, l'espace de réception et les éléments de blocage de l'organe de fixation étant adaptés pour, en position de blocage de l'organe de fixation, permettre une dilatation selon la direction longitudinale du profilé de montage. L'organe d'arrêt forme alors un point bloquant et l'organe de fixation un point dilatant.

Les parois latérales peuvent être agencées pour venir en butée contre le profilé de montage selon la direction transversale en position de blocage du l'organe de fixation.

Par exemple, la base peut présenter un contour parallélépipédique, de préférence avec deux petits côtés parallèles entre eux et deux grands côtés parallèles entre eux, la base comportant deux ailes de fixation respectivement le long des deux petits côtés, de part et d'autre de l'espace de réception, les ailes de fixation portant des éléments de fixation de préférence agencés parallèlement aux grands côtés et dont l'un s'étend selon l'axe de pivotement, les parois latérales étant de préférence agencées parallèlement aux petits côtés.

En particulier, chacun des petits côtés peut former avec une ligne perpendiculaire à l'un des grands côtés un angle aigu de telle sorte qu'un déplacement en rotation autour de l'axe de pivotement d'une distance correspondant à l'angle fait passer l'organe de fixation de la position de montage à la position de blocage dans laquelle les éléments de fixation sont sensiblement (par exemple à +/-10° près) alignés avec la direction transversale.

On peut également prévoir que la structure de montage soit adaptée pour permettre le montage d'au moins un panneau, généralement au moins deux, de récupération d'énergie solaire agencés de manière adjacente selon la direction transversale, la partie de maintien comprenant deux surfaces d'appui écartées l'une de l'autre selon la direction transversale et sur lesquelles les bords longitudinaux des panneaux de récupération sont destinés à reposer, le profilé de montage comprenant une conduite centrale de drainage agencée sous lesdites surfaces d'appui, ladite conduite centrale de drainage présentant une ouverture supérieure délimitée par les surfaces d'appui.

En outre, le profilé de montage peut comprendre deux conduites latérales de drainage agencées respectivement sous les surfaces d'appui de part et d'autre de la conduite centrale de drainage, lesdites conduites latérales de drainage présentant chacune une ouverture supérieure délimitée intérieurement par l'une des surfaces d'appui.

En particulier, chaque conduite latérale de drainage peut comporter une paroi de fond s'étendant selon la direction transversale en s'éloignant de la surface d'appui, la paroi de fond étant conformée pour permettre l'encliquetage d'organes de connexion, de préférence électrique, des panneaux de récupération.

La structure de montage peut également être adaptée pour permettre le montage d'au moins un panneau, généralement au moins deux, de récupération d'énergie solaire agencés de manière adjacente selon la direction longitudinale, lesdits panneaux de récupération présentant chacun un bord transversal selon la direction transversale. La structure de montage peut alors comprendre en outre au moins une structure d'étanchéité qui s'étend selon la direction transversale, ladite structure d'étanchéité étant adaptée pour assurer l'étanchéité entre les bords transversaux des panneaux de récupération. La structure d'étanchéité comporte :
- une base,
- une partie de solidarisation adaptée pour solidariser de manière étanche la structure d'étanchéité à chacun des bords transversaux des panneaux de récupération, ladite partie de solidarisation étant placée à distance de la base selon la direction verticale,
- au moins une conduite de drainage agencée sous la partie de solidarisation,
ladite structure d'étanchéité étant agencée pour que la conduite de drainage de ladite structure d'étanchéité soit en communication de fluide avec la conduite de drainage du profilé de montage.

De préférence, les profilés de montage présentent une certaine mobilité par rapport à la structure d'étanchéité, pour tenir compte notamment des phénomènes de dilatation différentielle des matériaux constitutifs des profilés de montage et de la structure d'étanchéité.

Selon un deuxième aspect, l'invention propose un système de récupération d'énergie solaire comprenant :
- une structure de montage telle que définie précédemment, et
- au moins un panneau de récupération d'énergie solaire présentant un bord longitudinal, le bord longitudinal étant maintenu dans la partie de maintien du profilé de montage.

En particulier, les panneaux de récupération peuvent être des modules photovoltaïques.

Selon un troisième aspect, l'invention propose une installation comprenant un support et un système de récupération d'énergie solaire tel que défini précédemment, une partie du socle du profilé de montage s'étendant dans l'espace de réception de l'organe de fixation, l'organe de fixation étant fixé sur le support dans la position de blocage, les éléments de blocage interférant avec le socle pour le bloquer.

Le support peut présenter une pente et au moins un élément support qui s'étend de préférence perpendiculairement à la pente, l'organe de fixation étant fixé sur l'élément support avec l'espace de réception ouvert selon la pente, le profilé de montage s'étendant selon la pente.

Selon un quatrième aspect, l'invention propose un procédé de montage d'un système de récupération d'énergie solaire sur un support, comprenant les étapes consistant à :
- prévoir un support et au moins un panneau de récupération d'énergie solaire présentant un bord longitudinal selon une direction longitudinale,
- prévoir une structure de montage comprenant :
   au moins un profilé de montage qui s'étend selon la direction longitudinale et qui comporte :
      un socle présentant une largeur selon une direction transversale perpendiculaire à la direction longitudinale,
      une partie de maintien adaptée pour maintenir le bord longitudinal du panneau de récupération, ladite partie de maintien étant placée à distance du socle selon une direction verticale perpendiculaire aux directions longitudinale et transversale,
      au moins une conduite de drainage agencée sous la partie de maintien,
   au moins un organe de fixation comportant une base et deux éléments de blocage écartés l'un de l'autre selon la direction transversale, lesdits éléments de blocage délimitant entre eux un espace de réception ouvert selon la direction longitudinale et adapté pour recevoir une partie du socle, lesdits éléments de blocage étant des parois latérales parallèles entre elles et s'étendant chacune perpendiculairement depuis la base, lesdites parois latérales présentant chacune au moins une rainure qui est ouverte sur l'espace de réception et qui est adaptée pour recevoir une partie du socle, les rainures des parois latérales étant en regard l'une de l'autre,
- fixer la base sur le support selon un axe de pivotement s'étendant selon la direction verticale dans une position de montage, dans laquelle les parois latérales sont parallèles à la direction longitudinale et définissent une première ouverture d'accès à l'espace de réception dans la direction verticale, ladite première ouverture d'accès présentant une dimension minimale selon la direction transversale qui est supérieure ou égale à la largeur du socle, les rainures des parois latérales étant écartées du socle lorsque le profilé de montage est placé dans l'espace de réception,
- placer le socle du profilé de montage dans l'espace de réception de l'organe de fixation, les éléments de blocage définissant la première ouverture d'accès et n'interférant pas avec le socle,
- faire pivoter l'organe de fixation autour de l'axe de pivotement dans une position de blocage, dans laquelle les parois latérales sont inclinées par rapport à la direction longitudinale et définissent une deuxième ouverture d'accès à l'espace de réception dans la direction verticale, ladite deuxième ouverture d'accès présentant une dimension minimale selon la direction transversale qui est strictement inférieure à la largeur du socle, les rainures des parois latérales recevant une partie du socle et les parois latérales interférant avec le socle pour le bloquer dans l'espace de réception,
   - maintenir le bord longitudinal du panneau de récupération dans la partie de maintien du profilé de montage.

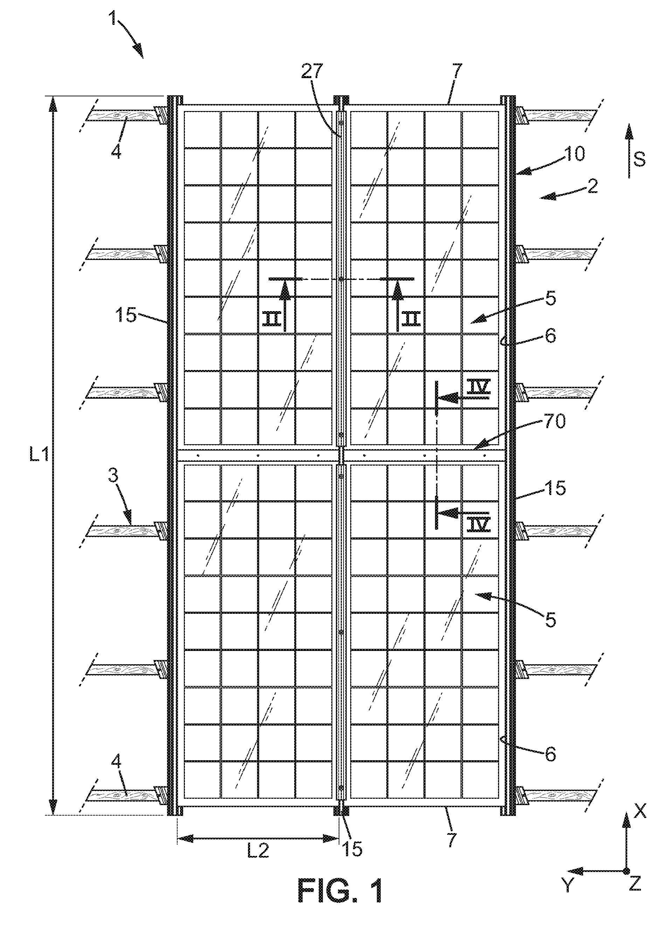

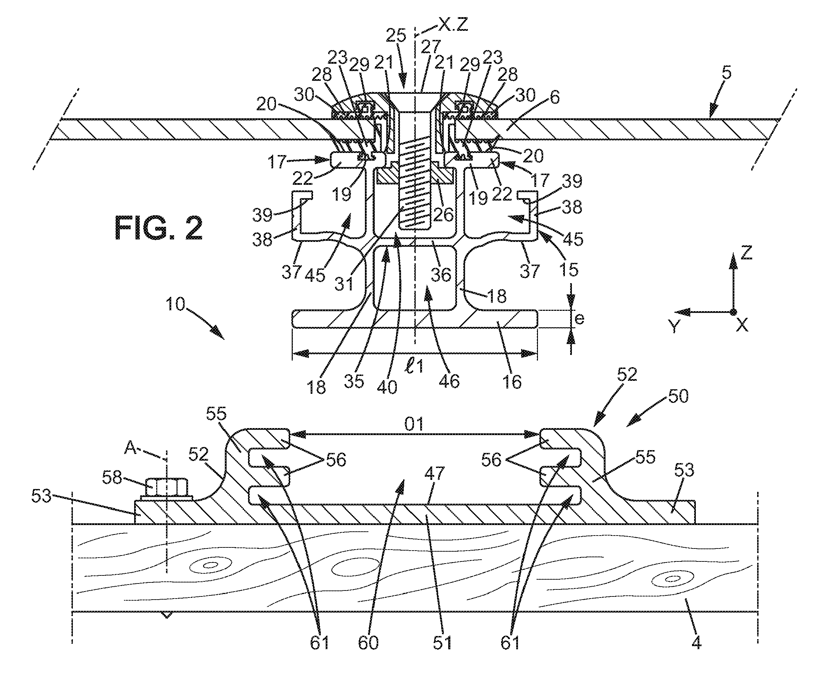

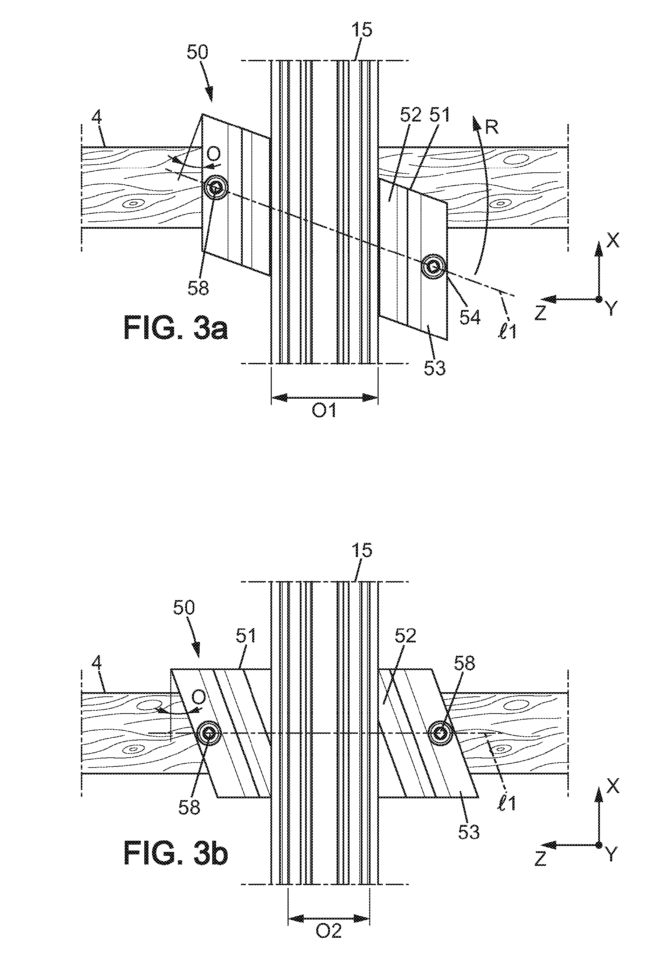

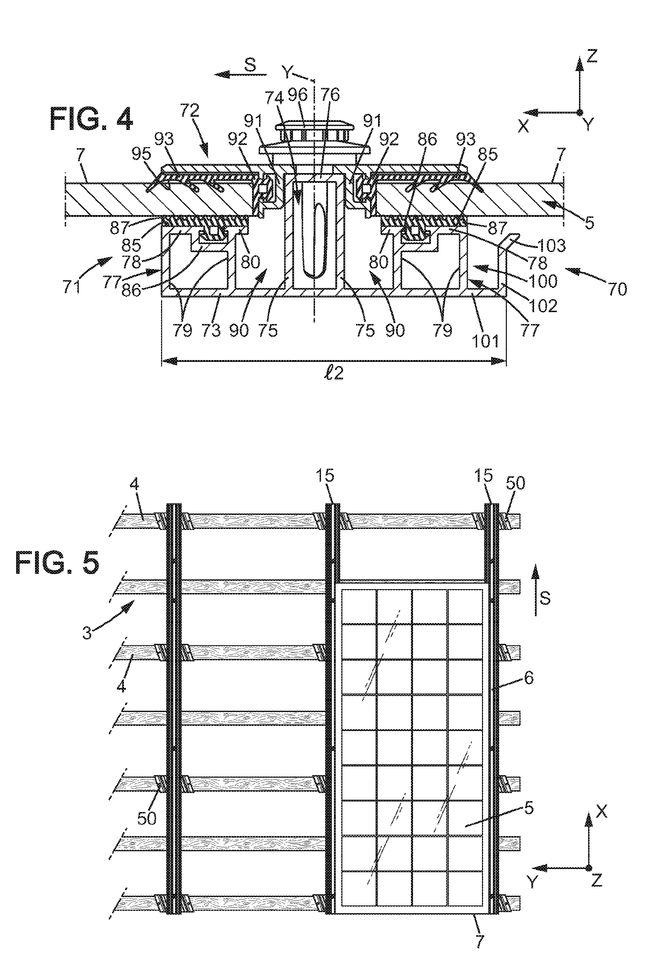

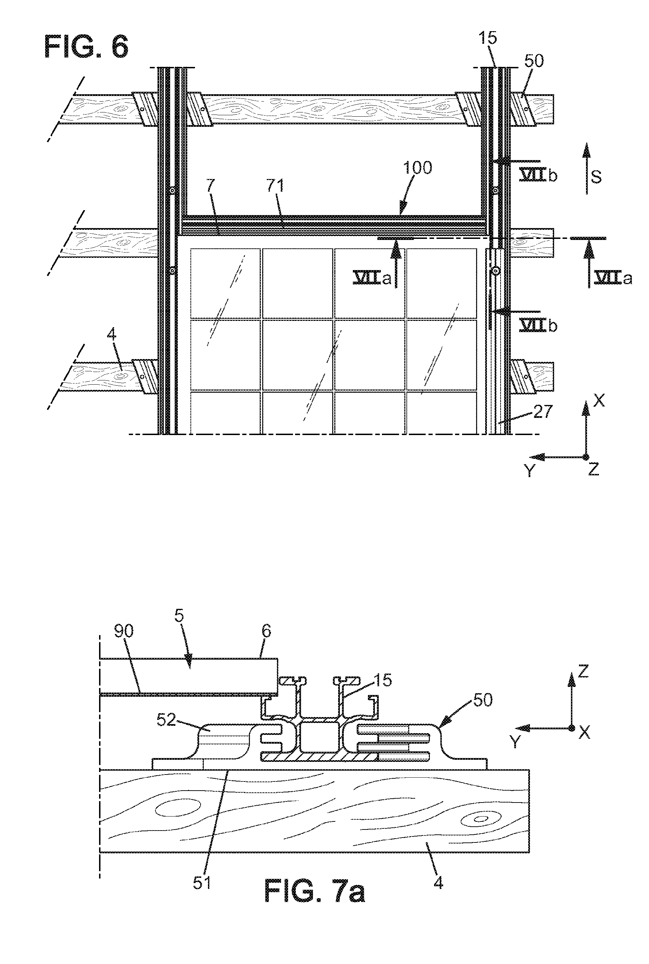

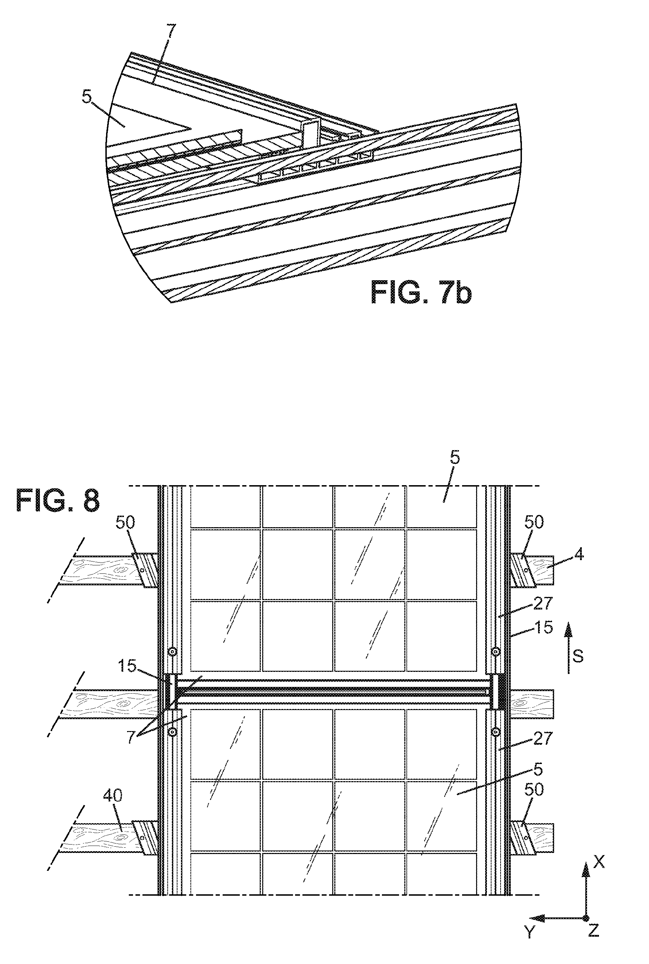

D'autres objets et avantages de l'invention apparaîtront à la lecture de la description qui suit de modes de réalisation particuliers donnés à titre d'exemple non limitatif, la description étant faite en référence aux dessins annexés dans lesquels :
- **la** **figure 1** est une représentation schématique partielle d'une installation de récupération d'énergie solaire comprenant un système de récupération d'énergie solaire à modules photovoltaïques montés sur une charpente par l'intermédiaire d'une structure de montage, des structures d'étanchéité s'étendant transversalement entre les modules photovoltaïques,
- **la** **figure 2** est une représentation partiellement éclatée en coupe selon l'orientation référencée II-II sur la figure 1 d'un profilé de montage et d'un organe de fixation de la structure de montage,
- **les** **figures 3a et 3b** sont des représentations en vue de dessus du profilé de montage et de l'organe de fixation illustrant l'organe de fixation respectivement dans une position de montage et dans une position de blocage,
- **la** **figure 4** est une représentation partielle en coupe selon l'orientation référencée IV-IV sur la figure 1 de la structure d'étanchéité,
- **les** **figures 5****,** **6****,** **7****,** **8****,** **9 et 10** sont des représentations d'étapes d'un procédé de montage du système de récupération d'énergie solaire sur la charpente, les figures 7a et 7b constituant des représentations agrandies respectivement selon les orientations référencées VIIa-VIIa et VIIb-VIIb sur la figure 6.

Sur les figures, les mêmes références désignent des éléments identiques ou analogues.

La figure 1 représente une installation 1 de récupération d'énergie solaire comprenant un système de récupération d'énergie solaire 2 monté sur un support.

Dans le mode de réalisation représenté, le support est une charpente 3 supportant une couverture d'un bâtiment. La charpente 3 présente un sommet S, dont la position est schématiquement indiquée par une flèche, depuis lequel s'étend une pente, généralement comprise en 10° et 80° par rapport à un plan horizontal, selon une direction longitudinale X. La charpente 3 comprend des éléments support, dénommés chevrons, non-représentés, s'étendant parallèlement les uns aux autres selon la direction longitudinale X et des éléments support, dénommés platelages 4, s'étendant parallèlement les uns aux autres selon une direction transversale Y perpendiculaire à la direction longitudinale X. Dans d'autres modes de réalisation, le support pourrait être un châssis présentant une pente ou non, comprenant des éléments support longitudinaux et transversaux, et destiné à être posé sur une charpente 3, une couverture de toit ou tout autre surface.

Le système de récupération d'énergie solaire 2 comprend plusieurs panneaux de récupération d'énergie solaire, dont quatre sont représentes sur la figure 1, agencés de manière adjacente selon les directions longitudinale X et transversale Y. Les panneaux de récupération d'énergie solaire sont, par exemple, constitués par des modules photovoltaïques 5. Chaque panneau photovoltaïque 5 comprend un réseau de cellules photovoltaïques qui génèrent une énergie électrique à partir de la lumière du soleil, et un circuit électrique connecté au réseau pour transporter l'énergie électrique générée par les cellules photovoltaïques. Sur la figure 1, chacun des modules photovoltaïques 5 présente un contour rectangulaire avec deux bords longitudinaux 6 s'étendant selon la direction longitudinale X et deux bords transversaux 7 s'étendant selon la direction transversale Y.

Comme représenté sur la figure 1, le système de récupération d'énergie solaire 2 comprend également une structure de montage 10 par l'intermédiaire de laquelle les modules photovoltaïques 5 sont montés sur la charpente 3.

Sur les figures 1 et 2, la structure de montage 10 comprend trois profilés de montage 15 fixés, comme il sera expliqué plus loin dans la description, sur les platelages 4 de la charpente 3 de manière à s'étendre globalement selon la direction longitudinale X.

Sur la figure 2, le profilé de montage 15, par exemple en aluminium extrudé, s'étend selon une direction d'extension qui, comme indiqué précédemment, correspond, dans le mode de réalisation représenté, à la direction longitudinale X.

Le profilé de montage 15 comporte un socle 16 sous la forme d'une plaque plane présentant une longueur L1 selon la direction longitudinale X, une largeur 11 selon la direction transversale Y et une épaisseur e selon une direction verticale Z perpendiculaire aux directions longitudinale X et transversale Y. La longueur L1 du profilé de montage 15 illustré correspond sensiblement à deux fois la longueur d'un bord longitudinal 6 d'un panneau photovoltaïque 5. Le profilé de montage 15 peut, toutefois, présenter toute autre longueur L1 appropriée.

La description de la structure de montage 10 faite en relation avec les directions longitudinale X, transversale Y et verticale Z définies pour la charpente 3 est aisément transposable à toute autre orientation de la structure de montage 10 définie à partir de la direction d'extension du profilé de montage et de deux directions perpendiculaires entre elles et à la direction d'extension.

Dans le mode de réalisation illustré, le profilé de montage 15 présente une symétrie par rapport à un plan longitudinal XZ médian. Les termes « intérieur » et « extérieur » relatif au profilé de montage 15 feront alors référence à des éléments placés respectivement à proximité et à distance du plan longitudinal XZ médian.

A distance du socle 16, selon la direction verticale Z, le profilé de montage comporte deux pieds 17 écartés l'un de l'autre selon la direction transversale Y. Les pieds s'étendent sur toute la longueur du socle 16 et sont reliés au socle 16 respectivement par deux parois verticales 18. Les pieds 17 présentent respectivement des surfaces supérieures 20, opposées au socle 16, qui sont coplanaires. Une rainure d'encliquetage 19 est ménagée dans chacune des surfaces supérieures 20. Chacun des pieds 17 déborde transversalement de part et d'autre de la paroi verticale 18 correspondante de sorte à présenter un épaulement intérieur 21 dirigé vers l'autre pied 17, et un épaulement extérieur 22 dirigé à l'opposé.

Les surfaces supérieures 20 des pieds 17 forment deux surfaces d'appui sur lesquelles les bords longitudinaux 6 de deux modules photovoltaïques 5 peuvent reposer par l'intermédiaire de joints d'étanchéité 23 encliquetés dans les rainures d'encliquetage 19. Les surfaces d'appui 20 appartiennent à une partie de maintien 25 du profilé de montage 15 adaptée pour maintenir en position, de manière étanche, les bords longitudinaux 6 des modules photovoltaïques 5.

Le maintien peut être assuré de toute façon appropriée et notamment, comme illustré sur la figure 2, par un système à bride comprenant une bride supérieure 27 et des écrous 26. La bride supérieure 27 comprend deux surfaces de contre-appui 28 adaptées pour venir respectivement en regard des surfaces d'appui 20 et pouvoir appuyer sur les bords longitudinaux 6 des modules photovoltaïques 5 à l'opposé des surfaces d'appui 20. Les surfaces de contre-appui 28 comportent chacune une rainure d'encliquetage 29 dans laquelle un joint d'étanchéité 30 est encliqueté. Les écrous 26 sont engagés entre les parois verticales 18 et adaptés pour venir en butée contre les épaulements intérieurs 21 des pieds 17. Des vis de serrage 31 montées dans des trous taraudés ménagés sur la bride supérieure 27 sont engagées dans les écrous 26, de sorte que le vissage des vis de serrage 31 entraîne le rapprochement de la bride supérieure 27 et des écrous 26 afin de pincer les bords longitudinaux 6 des modules photovoltaïques 5 entre les surfaces d'appui 20 et les surfaces de contre-appui 28.

Entre le socle 16 et les pieds 17, par exemple dans une zone sensiblement médiane, le profilé de montage 15 comporte une paroi intermédiaire 35 qui s'étend selon la direction transversale Y. La paroi intermédiaire 35 présente une portion centrale 36, entre les parois verticales 18, et deux portions latérales 37 qui prolongent la paroi intermédiaire 35 au-delà des parois verticales 18 jusqu'à des extrémités libres. Comme illustré, la paroi intermédiaire 35 peut présenter une largeur selon la direction transversale Y sensiblement égale à la largeur du socle 16. A chacune de ses extrémités libres, la paroi intermédiaire 35 est pourvue d'un rebord 38 s'étendant selon la direction verticale Z et présentant un retour transversal 39, dirigé vers la paroi verticale 18 correspondante. Selon les applications, la longueur du rebord 38 peut être adaptée pour que le retour transversal 39 vienne ou non en contact avec le panneau photovoltaïque 5. Dans le mode de réalisation représenté, le retour transversal 39 du rebord 38 est situé à une distance du socle 16, mesurée selon la direction verticale Z, inférieure à celle des surfaces d'appui 20. Une distance verticale, dont l'utilité apparaîtra à la lecture de la suite de la description, existe alors entre le retour transversal 39 et les surfaces d'appui 20.

Chacune des portions latérales 37 peut être conformée pour présenter une concavité tournée vers le socle 16. Sur la figure 2, la concavité se présente sous la forme d'un arrondi.

Les parois verticales 18 définissent avec le socle 16 et la portion centrale 36 un logement 46 tubulaire s'étendant sur toute la longueur du profilé de montage 15.

Les parois verticales 18 définissent, par ailleurs, dans une zone à distance du socle 16, au-dessus du logement 46 précité, avec la portion centrale 36 de la paroi intermédiaire 35 une conduite centrale de drainage 40. La conduite centrale de drainage 40 présente une ouverture supérieure délimitée par des bords formés par les surfaces d'appui 20 des pieds 17. La conduite centrale de drainage 40 est ainsi agencée sous les surfaces d'appui 20, avec les épaulements intérieurs 21 des pieds 17 surplombant la conduite centrale de drainage 40. La conduite centrale de drainage 40, dans laquelle les écrous 26 sont placés, permet notamment de récupérer l'eau d'infiltration qui pourrait s'infiltrer en amont des surfaces d'appui 20, entre les joints d'étanchéité 30 de la bride supérieure 27 et les bords longitudinaux 6 des modules photovoltaïques 5.

En outre, de part et d'autre de la conduite centrale de drainage 40, le profilé de montage 15 dispose de deux conduites latérales de drainage 45 dont les parois verticales 18 définissent des parois intérieures respectives, les portions latérales 37 de la paroi intermédiaire 35 définissent des parois de fond respectives et les rebords 38 définissent des parois extérieures respectives. Chaque conduite latérale de drainage 45 présente une ouverture supérieure délimitée par un bord intérieur, à proximité du plan longitudinal XZ médian, formé par l'une des surfaces d'appui 20, et un bord extérieur, à distance du plan longitudinal XZ médian, formé par l'un des retours transversaux 39. Les conduites latérales de drainage 45 sont ainsi également placées sous les surfaces d'appui 20, de l'autre côté des parois verticales 18 par rapport à la conduite centrale de drainage 40, avec les épaulements extérieurs 22 surplombant respectivement les conduites latérales de drainage 45.

Entre chaque conduite latérale de drainage 45 et le socle 16, la conformation de la paroi de fond 37 permet l'encliquetage d'organes de connexion électrique, non représentés, des panneaux de récupération, par exemple de gaines électriques dans le cas de modules photovoltaïques.

Comme illustré sur les figures 2, 3a et 3b, la structure de montage 10 comprend également un organe de fixation, sous la forme d'un patin 50, par l'intermédiaire duquel le profilé de montage 15 est monté sur la charpente 3. Chaque profilé de montage 15 peut être monté sur la charpente 3 à l'aide d'un ou plusieurs patins 50.

Le patin 50 comporte :
- une base 51 destinée à être fixée sur l'un des platelages 4 de la charpente 3,
- deux parois latérales 52, parallèles entre elles et s'étendant chacune perpendiculairement depuis la base 51.

Dans le mode de réalisation représentée, la base 51 présente un contour parallélépipédique avec deux petits côtés parallèles entre eux et deux grands côtés parallèles entre eux. La base 51 comporte, le long des deux petits côtés du contour, deux ailes de fixation 53. Chacune des ailes de fixation 53 est pourvue d'un orifice de fixation 54, central, d'axe vertical. Comme il apparaîtra de la suite de la description, les orifices de fixation forment des éléments de fixation du patin 50 au support.

Les parois latérales 52 sont agencées de manière contiguë aux ailes de fixation 53, parallèlement aux petits côtés. Le patin 50 présente alors un angle θ aigu entre chacun des petits côtés et une ligne perpendiculaire à l'un des grands côtés. Dans le mode de réalisation illustré, l'angle θ est compris entre 10° et 50°, de préférence entre 25° et 35°.

Chacune des parois latérales 52 comporte une partie verticale 55 perpendiculaire à la base 51, et deux rebords 56 parallèles entre eux s'étendant perpendiculairement depuis la partie verticale 55 vers l'autre paroi latérale 52. Sur chaque paroi latérale 52, un premier rebord 56 est situé à une distance, mesurée perpendiculairement à la base 51, de la base 51 correspondant sensiblement à l'épaisseur e du socle 16, et un deuxième rebord 56 est situé à une distance, mesurée perpendiculairement à la base 51, du premier rebord 56 correspondant sensiblement à l'épaisseur e du socle 16. Les extrémités libres en regard des premiers rebords 56, de même que ceux des deuxièmes rebords 56, sont écartés d'une distance supérieure ou égale à la largeur 11 du socle 16. Sur la figure 2, la distance entre les bords libres correspond sensiblement à la largeur 11 du socle 16.

Les parois latérales 52 délimitent ainsi entre elles un espace de réception 60 ouvert à l'opposé de la base 51 et parallèlement aux parois latérales 52, l'espace de réception 60 étant adapté pour recevoir une partie du socle 16. Les rebords 56 définissent, quant à eux, sur chaque paroi latérale 52, deux rainures 61 parallèles aux petits côtés, ouvertes sur l'espace de réception 60 et adaptées pour recevoir une partie du socle 16. Les rainures 61 de l'une des parois latérales 52 sont placées en regard des rainures 61 de l'autre paroi latérale 52.

A équidistance des parois latérales 52, le patin 50 présente, sur la surface de la base en regard de l'espace de réception 60, un élément de repérage s'étendant parallèlement aux parois latérales 52. Sur la Figure 2, l'élément de repérage est une rainure en V 47.

En relation avec les figures 3a et 3b, on décrit un procédé de montage de l'un des profilés de montage 15 sur le platelage 4 de la charpente 3.

Comme illustré sur la figure 3a, le patin 50 est fixé au platelage 4 par l'intermédiaire d'une vis 58 traversant l'un des orifices de fixation 54. Le patin 50 peut alors pivoter selon un axe de pivotement A correspondant à l'axe vertical de l'orifice de fixation 54. Le patin 50 est positionné de telle manière que la rainure en V 47 soit alignée avec la direction longitudinale X de la charpente 3. Pour ce faire, un cordeau peut être placé sur la charpente 3 entre le point le plus haut et le point le plus bas, puis la rainure en V 47 de chaque patin 50 est alignée avec le cordeau.

Le patin 50 est placé dans une position de montage dans laquelle une ligne 11 passant par les orifices de fixation est décalée par rapport à la direction transversale Y de la charpente 3 de l'angle θ entre chacun des petits côtés et la ligne perpendiculaire à l'un des grands côtés. Les parois latérales 52 sont alors parallèles à la direction longitudinale X et définissent une première ouverture d'accès O1 à l'espace de réception 60 dans la direction verticale Z. Compte tenu de l'écartement entre les bords libres des rebords 56, la première ouverture d'accès O1 présente une dimension minimale selon la direction transversale Y (c'est-à-dire le plus petit écartement entre les parois latérales 52 pris dans la direction transversale Y) correspondant sensiblement à la largeur 11 du socle 16.

Les extrémités libres des parois latérales 52 présentant un écartement au moins égal à la largeur 11 du socle 16, les parois latérales 52 n'interférent pas avec le socle 16 et le socle 16 du profilé de montage 15 peut être placé dans l'espace de réception 60 du patin 50 avec sa direction longitudinale X1 en correspondance avec la première direction D1. Les rainures 61 sont écartées du socle 16, parallèlement à celui-ci.

Comme représenté sur la figure 3a par une flèche R, le patin 50 est déplacé en rotation autour de l'axe de pivotement A d'une distance correspondant à l'angle θ entre chacun des petits côtés et la ligne perpendiculaire à l'un des grands côtés.

Sur la figure 3b, l'organe de fixation 50 est mis dans une position de blocage dans laquelle la ligne 11 passant par les orifices de fixation 54 s'étend sensiblement selon la direction transversale Y de la charpente 3. Les parois latérales 52 sont alors inclinées par rapport à la direction longitudinale X de la charpente 3 de sorte à définir une deuxième ouverture d'accès 02 à l'espace de réception 60 dans la direction verticale Z. La deuxième ouverture d'accès 02 présente une dimension minimale selon la direction transversale (c'est-à-dire le plus petit écartement entre les parois latérales 52 pris dans la direction transversale Y) qui est strictement inférieure à la largeur 11 du socle 16. Dans cette position, en choisissant de manière appropriée l'agencement des parois latérales 52, notamment en fonction de leur inclinaison par rapport aux grands côtés, de leur longueur et de leur écartement, on peut prévoir que les parties verticales 55 des parois latérales 52 viennent en butée contre le socle 16 du profilé de montage 15 selon la direction transversale Y. Les contacts des parois latérales 52 avec le socle 16 sont décalés selon la direction longitudinale X.

Les extrémités libres des parois latérales 52 présentant au moins localement un écartement strictement inférieur à la largeur 11 du socle 16, les parois latérales 52 dont deux rainures 61 en regard reçoivent une partie du socle 16 et interfèrent avec le socle 16 pour le bloquer. Les parois latérales 52 du patin 50 forment ainsi des éléments de blocage du profilé de montage 15. En choisissant les rainures entre lesquelles le socle 16 est retenu, il est possible de réaliser un réglage en hauteur du profilé de montage 15.

Le patin 50 est ensuite immobilisé en rotation par vissage d'une vis 58 dans le platelage 4 au travers de l'autre orifice de fixation 54. Le profilé de montage 15 est ainsi fixé à la charpente 3 en s'étendant dans la pente.

La structure de montage peut également comprendre un organe d'arrêt adapté pour bloquer le profilé de montage 15 (à au moins l'une de ses extrémités) selon la direction longitudinale X par rapport à la charpente 3. L'espace de réception 60 et les parois latérales 52 du patin 50 peuvent alors présenter des dimensions autorisant, en position de blocage du patin 50, une dilatation selon la direction longitudinale X du profilé de montage 15. L'organe d'arrêt forme un point bloquant et le patin 50, un point dilatant. En variante, on pourrait prévoir que l'un des patins 50 réalise le point bloquant.

Selon les dimensions du système de récupération d'énergie solaire 2, plusieurs profilés de montage 15 peuvent être placés bout à bout selon la direction longitudinale X. Pour assurer le contrôle de la dilatation des profilés de montage, une éclisse peut être placée dans les logements 46 de deux profilés de montage 15 adjacents, l'éclisse étant fixée à un seul des profilés de montage 15.

La structure de montage 10 précédemment décrite a été mise en oeuvre avec un système de récupération d'énergie 2 comprenant plusieurs modules photovoltaïques 5 adjacents selon deux directions perpendiculaires. Une telle structure de montage 10 pourrait toutefois être mise en oeuvre avec tout autre agencement de modules photovoltaïques 5 ou autre, notamment avec deux ou plus panneaux adjacents selon une seule des deux directions perpendiculaires. Cette structure de montage 10 pourrait également être mise en oeuvre avec un seul panneau photovoltaïque.

Le profilé de montage 15 peut être adapté pour ne recevoir le bord que d'un seul panneau dans sa partie de maintien 25. Ce peut notamment être le cas d'un profilé de montage 15 utilisé pour un panneau périphérique ou lorsqu'un seul panneau doit être monté sur la charpente 3, une liaison étanche avec le reste de la couverture pouvant alors être prévue.

L'invention n'est, par ailleurs, pas limitée au mode de réalisation précédemment décrit de l'organe de fixation 50. En particulier, les parois latérales 52 pourraient ne présenter qu'une seule rainure 61 ou plus de deux rainures 61.

La structure de montage 10 comprend également des structures d'étanchéité 70 qui s'étendent en travers de la pente et qui sont placées chacune entre les bords transversaux 7 adjacents de deux modules photovoltaïques 5. Les structures d'étanchéité 70 sont prévues pour assurer l'étanchéité entre les bords transversaux 7 des panneaux de récupération 5.

La figure 4 représente l'une des structures d'étanchéité 70 qui s'étend selon la direction transversale Y, entre les bords transversaux 7 adjacents de deux modules photovoltaïques 5.

La structure d'étanchéité 70 comprend des premier 71 et deuxième 72 profilés d'étanchéité, par exemple en aluminium extrudé, superposés et entre lesquels les bords transversaux 7 de modules photovoltaïques 5 sont pincés de manière étanche.

En particulier, le premier profilé d'étanchéité 71 comporte une base 73, généralement plane, présentant une longueur L2 selon une direction d'extension qui correspond ici à la direction transversale Y, et une largeur 12 selon la direction longitudinale X. La longueur L2 du premier profilé d'étanchéité 71 illustré correspond sensiblement à la largeur d'un bord transversal 7 d'un panneau photovoltaïque 5, le premier profilé d'étanchéité 71 pouvant toutefois présenter toute autre longueur appropriée.

La description de la structure d'étanchéité 70 faite en relation avec les directions longitudinale X, transversale Y et verticale Z définies pour la charpente 3 est aisément transposable à toute autre orientation de la structure d'étanchéité définie à partir de la direction d'extension du premier profilé d'étanchéité et de deux directions perpendiculaires entre elles et à la direction d'extension.

Le premier profilé d'étanchéité 71 comporte deux supports 77 qui s'étendent verticalement depuis la base 73. Les supports 77 sont agencés de part et d'autre d'un plan transversal YZ médian. Les termes « intérieur » et « extérieur » relatifs au premier profilé d'étanchéité 71 feront référence à des éléments placés respectivement à proximité et à distance du plan transversal YZ médian.

Chaque support 77 comporte une paroi horizontale 78 parallèle à la base 73et reliée à la base 73 par deux nervures verticales 79 espacées. La paroi horizontale 78 de chacun des supports 77 se prolonge selon la direction longitudinale X par rapport à la nervure verticale 79 intérieure par un épaulement intérieur 80 s'étendant vers l'autre support 77.

Les parois horizontales 78 des supports 77 présentent respectivement des surfaces supérieures 85 coplanaires qui forment des surfaces d'appui sur lesquelles les bords transversaux 7 des modules photovoltaïques 5 peuvent reposer. Comme pour les surfaces d'appui 20 du profilé de montage 15, les surfaces d'appui 85 du premier profilé d'étanchéité 71 sont pourvues chacune d'une rainure d'encliquetage 86 dans laquelle un joint d'étanchéité 87 recouvrant la surface d'appui 85 est encliqueté. En particulier, chacun des joints d'étanchéité 87 recouvrant les surfaces d'appui 85 se présente sous la forme d'une plaque ayant une surface supérieure ondulée avec laquelle le bord transversal 7 du panneau photovoltaïque 5 vient en contact.

Comme il apparaîtra dans la suite de la description, le premier profilé d'étanchéité 71 est avantageusement dimensionné de sorte que les surfaces d'appui 85 soient situées à une distance, mesurée selon la direction verticale Z, sensiblement égale à la distance verticale entre le retour transversal 39 du rebord 38 et les surfaces d'appui 20 du profilé de montage 15.

Les supports 77 délimitent avec la base 73 une conduite de drainage 90. En particulier, la conduite de drainage 90 est délimitée par les nervures verticales 79 intérieures des supports 77. La conduite de drainage 90 présente une ouverture supérieure présentant des bords formés par les surfaces d'appui 85. La conduite de drainage 90 est ainsi agencée sous les surfaces d'appui 85, avec les épaulements intérieurs 80 surplombant la conduite de drainage 90, de sorte à récupérer de l'eau d'infiltration en amont des surfaces d'appui 85.

Sur la figure 4, le premier profilé d'étanchéité 71 comporte une conduite de drainage (ou logement central) 74 qui s'étend selon la direction verticale Z en séparant la conduite de drainage 90 en deux compartiments distincts. La conduite de drainage 74 est délimité par deux parois verticales 75 agencées de part et d'autre du plan transversal YZ médian, et par une paroi horizontale 76 reliant des extrémités libres de parois verticales 75 à l'opposé de la base 73. La paroi horizontale 76 de la conduite de drainage 74 est située à une distance mesurée verticalement supérieure à celle des surfaces d'appui 85.

La base 73, la conduite de drainage 74 et les supports 77 sont agencés de manière à présenter une symétrie par rapport au plan transversal YZ médian. Le premier profilé d'étanchéité 71 présente, toutefois, une dissymétrie formée par une conduite extérieure de drainage 100 agencée sous l'une des surfaces d'appui 85, de l'autre côté de la conduite de drainage 90.

La conduite extérieure de drainage 100 comporte une paroi de fond 101 qui s'étend dans le prolongement de la base 73, selon la direction longitudinale X, à l'opposé de la conduite de drainage 90 jusqu'à une extrémité libre. La conduite extérieure de drainage 100 comporte également un rebord 102 qui s'étend depuis l'extrémité libre de la paroi de fond 101 selon la direction verticale Z. Le rebord 102 présente une portion d'extrémité 103 inclinée vers l'extérieur.

La conduite extérieure de drainage 100 est ainsi agencée sous la surface d'appui 85 et présente une ouverture supérieure dont un bord intérieur est constitué par la surface d'appui 85 et un bord extérieur est constitué par la portion d'extrémité 103 du rebord 102. Comme il apparaîtra dans la suite de la description, la conduite extérieure de drainage 100 peut permettre de récupérer de l'eau d'infiltration en aval de la surface d'appui 85 mais aussi de récupérer de l'eau de condensation se formant sous les modules photovoltaïques 5.

Le deuxième profilé d'étanchéité 72 se présente sous la forme d'une plaque, plane, ayant sensiblement une même longueur que le premier profilé d'étanchéité 71 et une largeur qui correspond à l'écartement entre les nervures verticales 79 extérieures des supports 77.

Le deuxième profilé d'étanchéité 72 comporte deux parois de positionnement 91 parallèles l'une à l'autre et perpendiculaires à la plaque. Les deux parois de positionnement 91 présentent un écartement selon la direction longitudinal X sensiblement égal à l'écartement des parois verticales 75 de la conduite de drainage 74. Les parois de positionnement 91 sont agencées pour venir de part et d'autre de la conduite de drainage 74. Sur une surface extérieure orientée à l'opposé de la conduite de drainage 74, chaque paroi de positionnement 91 comporte une rainure d'encliquetage 92.

Le deuxième profilé d'étanchéité 72 comprend deux surfaces de contre-appui 95 agencées sur une surface inférieure de la plaque respectivement en regard de surfaces d'appui 85. Les surfaces de contre-appui 95 sont destinées à reposer respectivement sur les bords transversaux 7 des modules photovoltaïques 5, du côté opposé aux surfaces d'appui 85. Les surfaces de contre-appui 95 sont recouvertes respectivement par des joints d'étanchéité 93, tel que des joints à lèvre, encliquetés dans les rainures d'encliquetage 92 des parois de positionnement 91 correspondantes.

Les surfaces d'appui 85 du premier profilé d'étanchéité 71 et les surfaces de contre-appui 95 du deuxième profilé d'étanchéité 72 forment ainsi une partie de solidarisation de la structure d'étanchéité 70 aux bords transversaux 7 des modules photovoltaïques 5.

Pour assurer la fixation des premier 71 et deuxième 72 profilés d'étanchéité et l'étanchéité entre ces profilés d'étanchéité, la partie de solidarisation comporte également un dispositif de serrage sous la forme d'une vis de serrage 96 traversant le deuxième profilé d'étanchéité 72 et s'étendant dans la conduite de drainage 74 du premier profilé d'étanchéité 71. L'invention n'est toutefois pas limitée à une telle réalisation du dispositif de serrage. En particulier, un système à bride analogue à celui décrit précédemment pourrait être prévu.

Comme indiqué précédemment, la structure d'étanchéité 70 mise en oeuvre avec plusieurs modules photovoltaïques 5 adjacents selon deux directions perpendiculaires, pourrait toutefois être utilisée dans tout autre agencement comprenant au moins deux modules photovoltaïques 5 adjacents selon la direction longitudinale X.

En relation avec les figures 5 à 10, on décrit un procédé de montage du système de récupération d'énergie solaire 2 sur la charpente 3.

Sur la figure 5, la structure de montage 10 ayant été montée sur la charpente 3 comme décrit précédemment en relation avec les figures 3a et 3b, les profilés de montage 15 s'étendent dans la direction longitudinale X avec des parties de leur socle 16 bloqués dans les patins 50 en position de blocage. Les bords longitudinaux 6 de l'un, premier, des modules photovoltaïques 5 reposent sur les surfaces d'appui 20 de deux profilés de montage 15 adjacents.

Sur la figure 6, les brides supérieures 27 sont mises en place de sorte que les bords longitudinaux 6 du premier panneau photovoltaïque 5 sont maintenus dans les parties de maintien 25 des deux profilés de montage 15, entre les surfaces d'appui 20 et les surfaces de contre-appui 28. En outre, le premier profilé d'étanchéité 71 est placé au niveau de l'un des bords transversaux 7 du premier panneau photovoltaïque 5 de telle sorte que le bord transversal 7 repose sur l'une des surfaces d'appui 85 du premier profilé d'étanchéité 71.

En particulier, comme on peut le voir sur les figures 7a et 7b illustrant des agrandissements des représentations respectivement selon les orientations référencées VIIa-VIIa et VIIb-VIIb sur la figure 6, la base 73 du premier profilé d'étanchéité 71 est posée sur les retours transversaux 39 des rebords 38 des profilés de montage 15 avec les compartiments des conduites de drainage 74 et 90 et la conduite extérieure de drainage 100 du premier profilé d'étanchéité 71 débouchant dans les conduites latérales de drainage 45 des profilés de montage 15. Du fait des distances verticales entre les surfaces d'appui 85 et la base 73 du premier profilé d'étanchéité 71, d'une part, et les surfaces d'appui 20 et les retours transversaux 39 des profilés de montage 15, l'ensemble des surfaces d'appui est coplanaire.

Chacun des profilés de montage 15 maintenant deux modules photovoltaïques 5 adjacents selon la direction transversale Y peut avoir des structures d'étanchéité 70 s'étendant transversalement de part et d'autre avec les conduites de drainage 74, 90, 100 des structures d'étanchéité 70 débouchant respectivement dans les conduites latérales de drainage 45 du profilé de montage 15.

On peut prévoir que la base 73 du premier profilé d'étanchéité 71 soit simplement posée sans fixation ni à la charpente 3, ni aux profilés de montage 15 afin de simplifier la gestion de la dilatation de la structure de montage.

En fonction de la position du bord transversal 7 du panneau photovoltaïque 5 dans la charpente 3, la conduite extérieure de drainage 100 du premier profilé d'étanchéité 71 est placée sous le bord transversal 7 du panneau photovoltaïque 5 ou en sens opposé. En particulier, pour le bord transversal 7 positionné en aval dans le sens de la pente, c'est-à-dire pour le bord transversal 7 situé à une hauteur moindre que celle du bord transversal 7 positionné en amont dans le sens de la pente, la conduite extérieure de drainage 100 est positionnée sous le bord transversal 7 de sorte à être orientée du côté du sommet S.

Sur la figure 6 où le bord transversal 7 amont du premier panneau photovoltaïque 5 est représenté, le premier profilé d'étanchéité 71 est positionné de telle manière que le bord transversal 7 amont repose sur la surface d'appui 85 dépourvue de conduite extérieure de drainage adjacente, la surface d'appui 85 pourvue de la conduite extérieure de drainage 100 adjacente s'étendant dans le sens opposé selon la direction longitudinale, vers le sommet S.

Sur la figure 8, un autre, deuxième, des modules photovoltaïques 5 est monté sur la structure de montage 10 de manière adjacente selon la direction longitudinale X. Le bord transversal 7 aval représenté sur la figure 8 est alors positionné sur l'autre surface d'appui 85 du premier profilé d'étanchéité 71 en recouvrant la conduite extérieure de drainage 100 afin qu'elle puisse récupérer l'eau de condensation sur une surface inférieure du deuxième panneau photovoltaïque 5.

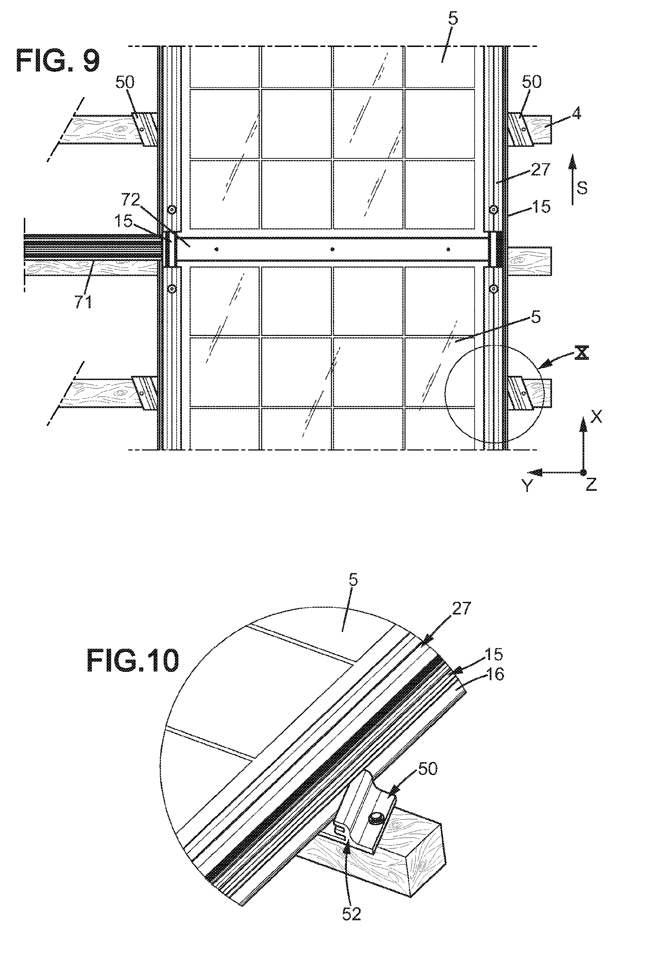

Sur la figure 10 qui illustre le détail référencé X sur la figure 9, le deuxième profilé d'étanchéité 72 est positionné sur le premier profilé d'étanchéité 71 avec les surfaces de contre-appui 95 reposant respectivement sur les bords transversaux 7 des premier et deuxième modules photovoltaïques 5 à l'opposé des surfaces d'appui 85.

La vis de serrage 96 est ensuite mise en place au travers du deuxième profilé d'étanchéité 72, dans la conduite de drainage 74 du premier profilé d'étanchéité 71 pour serrer les premier 71 et deuxième 72 profilés d'étanchéité l'un contre l'autre et pincer les bords transversaux 7 adjacents des modules photovoltaïques 5 entre les surfaces d'appui 85 et les surfaces de contre-appui 95.

L'invention n'est toutefois pas limitée à la structure d'étanchéité en deux parties décrite. Toute autre structure assurant l'étanchéité transversalement à la direction longitudinale dans laquelle le profilé de montage s'étend peut être prévue.

## Revendications

1. Structure de montage (10) adaptée pour permettre le montage d'au moins un panneau de récupération d'énergie solaire (5) sur un support (3), ledit panneau de récupération (5) présentant un bord longitudinal (6) selon une direction longitudinale (X), ladite structure de montage (10) comprenant :
- au moins un profilé de montage (15) qui s'étend selon la direction longitudinale (X), ledit profilé de montage (15) comportant :
un socle (16) présentant une largeur (11) selon une direction transversale (Y) perpendiculaire à la direction longitudinale (X),
une partie de maintien (25) adaptée pour maintenir le bord longitudinal (6) du panneau de récupération (5), ladite partie de maintien (25) étant placée à distance du socle (16) selon une direction verticale (Z) perpendiculaire aux directions longitudinale (X) et transversale (Y),
au moins une conduite de drainage (40, 45) agencée sous la partie de maintien (25),
- au moins un organe de fixation (50) du profilé de montage (15) sur le support (3), ledit organe de fixation (50) comportant une base (51) destinée à être fixée sur le support (3), et deux éléments de blocage (52) écartés l'un de l'autre selon la direction transversale (Y), lesdits éléments de blocage (52) délimitant entre eux un espace de réception (60) ouvert selon la direction longitudinale (X) et adapté pour recevoir une partie du socle (16), lesdits éléments de blocage étant des parois latérales (52) parallèles entre elles et s'étendant chacune perpendiculairement depuis la base (51), lesdites parois latérales (52) présentant chacune au moins une rainure (61) qui est ouverte sur l'espace de réception (60) et qui est adaptée pour recevoir une partie du socle (16), les rainures (61) des parois latérales (52) étant en regard l'une de l'autre,
ladite structure de montage étant **caractérisée en ce que** la base (51) présente un axe de pivotement (A) s'étendant selon la direction verticale (Z) et selon lequel ladite base est fixée sur le support (4), ledit organe de fixation (50) étant pivotant autour de l'axe de pivotement (A) entre :
une position de montage, dans laquelle les parois latérales (52) sont parallèles à la direction longitudinale (X) et définissent une première ouverture d'accès (O1) à l'espace de réception (60) dans la direction verticale (Z), ladite première ouverture d'accès (O1) présentant une dimension minimale selon la direction transversale (Y) qui est supérieure ou égale à la largeur (11) du socle (16), les rainures (61) des parois latérales (52) étant écartées du socle (16) lorsque le profilé de montage (15) est placé dans l'espace de réception (60), de sorte que les parois latérales (52) n'interfèrent pas avec le socle (16), et
une position de blocage, dans laquelle les parois latérales (52) sont inclinées par rapport à la direction longitudinale (X) et définissent une deuxième ouverture d'accès (02) à l'espace de réception (60) dans la direction verticale (Z), ladite deuxième ouverture d'accès (02) présentant une dimension minimale selon la direction transversale (Y) qui est strictement inférieure à la largeur (11) du socle (16), les rainures (61) des parois latérales (52) recevant une partie du socle (16) lorsque le profilé de montage (15) est placé dans l'espace de réception (60), de sorte que les parois latérales (52) interfèrent avec le socle (16).

2. Structure de montage (10) selon la revendication 1, comprenant un organe d'arrêt adapté pour bloquer le profilé de montage (15) à au moins l'une de ses extrémités selon la direction longitudinale (X), l'espace de réception (60) et les éléments de blocage (52) de l'organe de fixation étant adaptés pour, en position de blocage de l'organe de fixation (50), permettre une dilatation selon la direction longitudinale (X) du profilé de montage (15).

3. Structure de montage (10) selon la revendication 1 ou 2, dans laquelle les parois latérales (52) sont agencées pour venir en butée contre le profilé de montage (15) selon la direction transversale (Y) en position de blocage de l'organe de fixation (50).

4. Structure de montage (10) selon l'une quelconque des revendications 1 à 3, dans laquelle la base (51) présente un contour parallélépipédique, la base (51) comportant deux ailes de fixation (53), de part et d'autre de l'espace de réception (60), les ailes de fixation (53) portant des éléments de fixation (54) agencés parallèlement aux grands côtés et dont l'un s'étend selon l'axe de pivotement (A).

5. Structure de montage (10) selon la revendication 4, dans laquelle chacun des petits côtés forme avec une ligne perpendiculaire à l'un des grands côtés un angle (θ) aigu de telle sorte qu'un déplacement en rotation (R) autour de l'axe de pivotement (A) d'une distance correspondant à l'angle (θ) fait passer l'organe de fixation (50) de la position de montage à la position de blocage dans laquelle les éléments de fixation (54) sont sensiblement alignés avec la direction transversale (Y).

6. Structure de montage (10) selon l'une quelconque des revendications 1 à 5, adaptée pour permettre le montage d'au moins un panneau, généralement au moins deux, de récupération d'énergie solaire (5) agencés de manière adjacente selon la direction transversale (Y), dans laquelle la partie de maintien (25) comprend deux surfaces d'appui (20) écartées l'une de l'autre selon la direction transversale (Y) et sur lesquelles les bords longitudinaux (6) des panneaux de récupération (5) sont destinés à reposer, le profilé de montage (15) comprenant une conduite centrale de drainage (40) agencée sous lesdites surfaces d'appui (20), ladite conduite centrale de drainage (40) présentant une ouverture supérieure délimitée par les surfaces d'appui (20).

7. Structure de montage (10) selon la revendication 6, dans laquelle le profilé de montage (15) comprend deux conduites latérales de drainage (45) agencées respectivement sous les surfaces d'appui (20) de part et d'autre de la conduite centrale de drainage (40), lesdites conduites latérales de drainage (45) présentant chacune une ouverture supérieure délimitée intérieurement par l'une des surfaces d'appui (20).

8. Structure de montage (10) selon la revendication 7, dans laquelle chaque conduite latérale de drainage (45) comporte une paroi de fond (37) s'étendant selon la direction transversale (Y) en s'éloignant de la surface d'appui (20), la paroi de fond (37) étant conformée pour permettre l'encliquetage d'organe de connexion, de préférence électrique, des panneaux de récupération (5).

9. Structure de montage (10) selon l'une quelconque des revendications 1 à 8, adaptée pour permettre le montage d'au moins un, panneau , généralement au moins deux, de récupération d'énergie solaire (5) agencés de manière adjacente selon la direction longitudinale (X), lesdits panneaux de récupération présentant chacun un bord transversal (7) selon la direction transversale (Y), ladite structure de montage (10) comprenant en outre au moins une structure d'étanchéité (70) qui s'étend selon la direction transversale (Y), ladite structure d'étanchéité (70) étant adaptée pour assurer l'étanchéité entre les bords transversaux (7) des panneaux de récupération (5), ladite structure d'étanchéité (70) comportant :
- une base (73)
- une partie de solidarisation (85, 95) adaptée pour solidariser de manière étanche la structure d'étanchéité (70) à chacun des bords transversaux (7) des panneaux de récupération (5), ladite partie de solidarisation (85, 95) étant placée à distance de la base (73) selon la direction verticale (Z),
- au moins une conduite de drainage (74, 90, 100) agencée sous la partie de solidarisation (85, 95),
ladite structure d'étanchéité (70) étant agencée pour que la conduite de drainage (74, 90, 100) de ladite structure d'étanchéité (70) soit en communication de fluide avec la conduite de drainage (40, 45) du profilé de montage (15).

10. Structure de montage (10) selon l'une quelconque des revendications 1 à 9 **caractérisée en ce que** les profilés (15) présentent une certaine mobilité par rapport à la structure d'étanchéité (10), pour tenir compte notamment des phénomènes de dilatation différentielle des matériaux.

11. Système de récupération d'énergie solaire (2) comprenant :
- une structure de montage (10) selon l'une quelconque des revendications 1 à 10,
et
- au moins un panneau de récupération d'énergie solaire (5) présentant un bord longitudinal (6), le bord longitudinal (6) étant maintenu dans la partie de maintien (25) du profilé de montage (15).

12. Système de récupération d'énergie solaire (2) selon la revendication 11, dans lequel les panneaux de récupération (5) sont des modules photovoltaïques.

13. Installation (1) comprenant un support (3) et un système de récupération d'énergie solaire (2) selon l'une quelconque des revendications 11 et 12, une partie du socle (16) du profilé de montage (15) s'étendant dans l'espace de réception (60) de l'organe de fixation (50), l'organe de fixation (50) étant fixé sur le support (3) dans la position de blocage, les éléments de blocage (52) interférant avec le socle (16) pour le bloquer.

14. Installation (1) selon la revendication 13, dans laquelle le support (3) présente une pente et au moins un élément support (4), l'organe de fixation (50) étant fixé sur l'élément support (4) avec l'espace de réception (60) ouvert selon la pente, le profilé de montage (15) s'étendant selon la pente.

15. Procédé de montage d'un système de récupération d'énergie solaire (2) sur un support (3), comprenant les étapes consistant à :
- prévoir un support (3) et au moins un panneau de récupération d'énergie solaire (5) présentant un bord longitudinal (6) selon une direction longitudinale (X),
- prévoir une structure de montage (10) comprenant :
au moins un profilé de montage (15) qui s'étend selon la direction longitudinale (X) et qui comporte :
un socle (16) présentant une largeur (11) selon une direction transversale (Y) perpendiculaire à la direction longitudinale (X),
une partie de maintien (25) adaptée pour maintenir le bord longitudinal (6) du panneau de récupération (5), ladite partie de maintien étant placée à distance du socle (16) selon une direction verticale (Z) perpendiculaire aux directions longitudinale (X) et transversale (Y),
au moins une conduite de drainage (40, 45) agencée sous la partie de maintien (25),
au moins un organe de fixation (50) comportant une base (51) et deux éléments de blocage (52) écartés l'un de l'autre selon la direction transversale (Y), lesdits éléments de blocage (52) délimitant entre eux un espace de réception (60) ouvert selon la direction longitudinale (X) et adapté pour recevoir une partie du socle (16), lesdits éléments de blocage étant des parois latérales (52) parallèles entre elles et s'étendant chacune perpendiculairement depuis la base (51), lesdites parois latérales (52) présentant chacune au moins une rainure (61) qui est ouverte sur l'espace de réception (60) et qui est adaptée pour recevoir une partie du socle (16), les rainures (61) des parois latérales (52) étant en regard l'une de l'autre,
- fixer la base (51) sur le support (3) selon un axe de pivotement s'étendant selon la direction verticale dans une position de montage, dans laquelle les parois latérales (52) sont parallèles à la direction longitudinale (X) et définissent une première ouverture d'accès (O1) à l'espace de réception (60) dans la direction verticale (Z), ladite première ouverture d'accès (O1) présentant une dimension minimale selon la direction transversale (Y) qui est supérieure ou égale à la largeur (11) du socle (16), les rainures (61) des parois latérales (52) étant écartées du socle (16) lorsque le profilé de montage (15) est placé dans l'espace de réception (60),
- placer le socle (16) du profilé de montage (15) dans l'espace de réception (60) de l'organe de fixation (50), les éléments de blocage (52) définissant la première ouverture d'accès (O1) et n'interférant pas avec le socle (16),
- faire pivoter l'organe de fixation (50) autour de l'axe de pivotement (A) dans une position de blocage, dans laquelle les parois latérales (52) sont inclinées par rapport à la direction longitudinale (X) et définissent une deuxième ouverture d'accès (02) à l'espace de réception (60) dans la direction verticale (Z), ladite deuxième ouverture d'accès (02) présentant une dimension minimale selon la direction transversale (Y) qui est strictement inférieure à la largeur (11) du socle (16), les rainures (61) des parois latérales (52) recevant une partie du socle (16) et les parois latérales (52) interférant avec le socle (16) pour le bloquer dans l'espace de réception (60),
- maintenir le bord longitudinal (6) du panneau de récupération (5) dans la partie de maintien (25) du profilé de montage (15).
